# EUROPÄISCHE PATENTSCHRIFT

(11) **EP 2 076 685 B1**
(45) Veröffentlichungstag und Bekanntmachung des Hinweises auf die Patenterteilung: **03.07.2013**
(21) Anmeldenummer: 07818684.8
(22) Anmeldetag: 04.10.2007
(51) Int. Cl.: F16D 25/06, F16D 25/12

(54) **KUPPLUNG UND KUPPLUNGSANORDNUNG MIT EINER SOLCHEN KUPPLUNG**
COUPLING AND COUPLING ARRANGEMENT HAVING SUCH A COUPLING
EMBRAYAGE ET SYSTÈME D'EMBRAYAGE MUNI D'UN TEL EMBRAYAGE

(30) Priorität: 11.10.2006 DE 102006048470; 08.12.2006 DE 102006057915
(43) Veröffentlichungstag der Anmeldung: 08.07.2009
(73) Patentinhaber: BorgWarner, Inc., Auburn Hills, MI 48326-2872 (US)
(72) Erfinder: HEINRICH, Johannes, Helmut, 61381 Friedrichsdorf (DE)
(74) Vertreter: Leckel, Ulf
(86) Internationale Anmeldenummer: PCT/EP2007/008605
(87) Internationale Veröffentlichungsnummer: WO 2008/043476

(56) Entgegenhaltungen:
- EP-A- 1 174 632
- WO-A-2006/100966
- US-A1- 2004 020 740
- US-A1- 2005 072 647

## Beschreibung

Die vorliegende Erfindung betrifft eine Kupplung, insbesondere eine Anfahrkupplung, mit einem Innenlamellenträger, der drehfest mit einer ersten Welle verbunden ist, einem Außenlamellenträger, der drehfest mit einer zweiten Welle verbunden ist, und einem Betätigungskolben zum reibschlüssigen Verbinden der Außenlamellen an dem Außenlamellenträger mit den Innenlamellen an dem Innenlamellenträger, wobei zwischen dem Innenlamellenträger und dem Außenlamellenträger ein Ölraum ausgebildet ist, der von einer drehfest mit der ersten oder zweiten Welle verbundenen Trennwand in einen dem Innenlamellenträger zugeordneten ersten Ölteilraum und einen zweiten Ölteilraum unterteilt ist. Die vorliegende Erfindung betrifft ferner eine Kupplungsanordnung mit einer solchen Kupplung.

Aus dem Stand der Technik sind eine Vielzahl von Anfahrkupplungen der eingangs genannten Art bekannt. So werden nasse Anfahrkupplungen beispielsweise an Stelle von hydrodynamischen Wandlern in Automatikgetrieben eingesetzt, um ein verbessertes Ansprechverhalten des Motors und einen reduzierten Kraftstoffverbrauch zu erzielen.

Die bekannten nassen Anfahrkupplungen umfassen einen Innenlamellenträger, der drehfest mit einer Antriebswelle verbunden ist, einen Außenlamellenträger, der drehfest mit einer Getriebeeingangswelle verbunden ist, und einen Betätigungskolben zum Verbinden der Außenlamellen des Außenlamellenträgers mit den Innenlamellen des Innenlamellenträgers. Der Betätigungskolben, der ebenfalls drehfest mit der Getriebeeingangswelle verbunden ist, ist innerhalb eines Ölraumes zwischen dem Innenlamellenträger und dem Außenlamellenträger angeordnet, und beide Seiten des Betätigungskolbens sind von Öl umgeben. So befindet sich auf der dem Außenlamellenträger zugewandten Seite des Betätigungskolbens das Öl zur hydraulischen Steuerung des Betätigungskolbens und auf der dem Innenlamellenträger zugewandten Seite des Betätigungskolbens das Öl, das der Kühlung der Lamellen dienen kann.

Bei Rotation der Kupplung wird das Öl aufgrund von Fliehkräften radial nach außen geschleudert, wodurch Druckerhöhungen beidseits des Betätigungskolbens auftreten, die wiederum die Ausübung einer Fliehölkraft auf beide Seiten des Betätigungskolbens bewirken. In einem geschlossenen Kupplungsgehäuse einer nassen Anfahrkupplung ist der hydraulisch angesteuerte Betätigungskolben prinzipiell dynamisch ausgeglichen, da auf beiden Seiten des Betätigungskolbens Öl vorgesehen ist.

Insbesondere bei einer Anfahrkupplung treten jedoch beim Anfahrvorgang selbst Verhältnisse auf, die dazu führen, dass der Betätigungskolben nicht vollständig von Fliehöleinflüssen befreit ist. Dies ist darauf zurückzuführen, dass der mit der Antriebswelle verbundene Innenlamellenträger beim Anfahrvorgang mit der Drehzahl des Motors rotiert, wohingegen der mit der Getriebeeingangswelle verbundene Außenlamellenträger mit einer Abtriebsdrehzahl rotiert, die innerhalb kurzer Zeit von Null bis auf die Drehzahl des Motors ansteigt. Dies führt dazu, dass auf die dem Innenlamellenträger zugewandte Seite des Betätigungskolbens eine höhere Fliehölkraft wirkt als auf die gegenüberliegende Seite.

Bei dem beschriebenen Aufbau würde die größere Fliehölkraft der Anpresskraft des Betätigungskolbens entgegenwirken. Dies kann so weit führen, dass der Motor bei zu starkem Gasgeben nicht rechtzeitig eingefangen werden kann.

Bei einem alternativen Aufbau der Kupplung, bei dem der Betätigungskolben drehfest mit der Antriebswelle verbunden ist und somit mit der Drehzahl des Motors rotiert, würde die größere Fliehölkraft hingegen die Anpresskraft des Betätigungskolbens unterstützen. Dieser selbstverstärkende Effekt ist jedoch insofern nachteilig, als dass eine kennfeldgesteuerte Regelung notwendig wird, um das Drehmoment der Kupplung sehr feinfühlig einregeln zu können.

Um das Problem unterschiedlich großer Fliehölkräfte beidseits des Betätigungskolbens zu beseitigen, schlägt die DE 10 2004 030 660 A1 eine nasslaufende Anfahrkupplung vor, bei der eine Trennwand in Form eines Abschirmblechs in dem Ölraum vorgesehen ist, der zwischen dem Betätigungskolben und dem Innenlamellenträger ausgebildet ist. Auf diese Weise ist der Betätigungskolben beidseitig mit Ölräumen umgeben, in denen das darin befindliche Öl mit der Drehzahl des Betätigungskolbens dreht. Dies führt zu einem guten Fliehölausgleich, selbst wenn eine hohe Differenzdrehzahl in der Kupplung vorliegt.

Die US 2005/0072647 A1 beschreibt eine Kupplung mit einem Ölraum, der durch eine Trennwand in einen dem Innenlamellenträger zugeordneten ersten Ölteilraum und einen zweiten Ölteilraum unterteilt ist, wobei ein Betätigungskolben in radialer Richtung von außen an der Trennwand abgestützt ist. Dem Betätigungskolben ist eine Rückholfeder zugeordnet, die in dem zweiten Ölteilraum angeordnet ist.

Die vorstehend genannte Kupplung hat sich bewährt, ist jedoch mit dem Nachteil behaftet, dass sie einen aufwendigen Aufbau und eine größere axiale Baulänge bedingt.

Es ist daher eine Aufgabe der vorliegenden Erfindung, eine Kupplung zu schaffen, die einen guten Fliehölausgleich bei einfachem Aufbau und geringer axialer Baulänge gewährleistet. Der Erfindung liegt ferner die Aufgabe zugrunde, eine Kupplungsanordnung mit einer solchen vorteilhaften Kupplung zu schaffen.

Diese Aufgabe wird durch die in Patentanspruch 1 bzw. 14 angegebenen Merkmale gelöst. Vorteilhafte Ausführungsformen der Erfindung sind Gegenstand der Ünteransprüche.

Die erfindungsgemäße Kupplung weist einen Innenlamellenträger, der drehfest mit einer ersten Welle verbunden ist, und einen Außenlamellenträger auf, der drehfest mit einer zweiten Welle verbunden ist. Die drehfeste Verbindung mit der ersten und zweiten Welle kann beispielsweise mittelbar oder unmittelbar erfolgen. Der Außenlamellenträger kann z. B. von einem Teil eines Kupplungsgehäuses und einem daran befestigten umlaufenden Tragteil für Außenlamellen gebildet sein. Die Kupplung weist ferner einen Betätigungskolben zum reibschlüssigen Verbinden der Außenlamellen an dem Außenlamellenträger mit den Innenlamellen an dem Innenlamellenträger auf. Zwischen dem Innenlamellenträger und dem Außenlamellenträger ist ein Ölraum ausgebildet. Es ist ferner eine drehfest mit der ersten oder zweiten Welle verbundene Trennwand vorgesehen, die den Ölraum in einen dem Innenlamellenträger zugeordneten ersten Ölteilraum und einen zweiten Ölteilraum unterteilt. Die Verbindung zwischen der Trennwand und der Welle kann mittelbar, wie beispielsweise über ein Kupplungsgehäuse, oder auch unmittelbar erfolgen. Der Betätigungskolben ist in radialer Richtung von außen an einem Führungsabschnitt der Trennwand abgestützt. Unter einer drehfesten Verbindung soll hier wie auch nachstehend eine Verbindung zwischen zwei Verbindungspartnern verstanden werden, die eine Übertragung der Drehung des einen Verbindungspartners auf den anderen Verbindungspartner grundsätzlich ermöglicht. Dabei kann das zwischen den Verbindungspartnern maximal übertragbare Drehmoment hoch, wie beispielsweise bei den im Kraftfluss befindlichen Verbindungspartnern, aber auch relativ niedrig sein, wie beispielsweise zwischen der Trennwand und der Welle oder dem Betätigungskolben und der Trennwand. Erfindungsgemäß ist eine mit dem Betätigungskolben zusammenwirkende Rückholfeder in dem ersten Ölteilraum angeordnet. Bei der Rückholfeder kann es sich beispielsweise um eine Tellerfeder handeln.

Während sich bei der aus der DE 10 2004 030 660 A1 bekannten Kupplung sowohl der Betätigungskolben als auch die Trennwand an einer Welle abstützen, ist bei der erfindungsgemäßen Kupplung lediglich die Trennwand mit der ersten oder zweiten Welle verbunden, wohingegen sich der Betätigungskolben in radialer Richtung von außen an dem Führungsabschnitt der Trennwand abstützt. Auf diese Weise hat die Kupplung einen einfachen Aufbau, zumal auf einen radial innenliegenden Abschnitt des Betätigungskolbens verzichtet wird, dessen Funktion nunmehr von der Trennwand übernommen ist. Ferner führt dieser Aufbau zu einer geringen axialen Baulänge, da Betätigungskolben und Trennwand nicht mehr in axialer Richtung hintereinander sondern in radialer Richtung hintereinander angeordnet sind, ohne dabei die radiale Ausdehnung der Kupplung zu erhöhen. Darüber hinaus gewährleistet die erfindungsgemäße Kupplung einen guten Fliehölausgleich, zumal die dem Öl in dem ersten Ölteilraum zugewandte Fläche des Betätigungskolbens reduziert ist.

In einer bevorzugten Ausführungsform der erfindungsgemäßen Kupplung kann der Betätigungskolben in axialer Richtung entlang des Führungsabschnittes der Trennwand verschoben werden, um die Außenlamellen reibschlüssig mit den Innenlamellen zu verbinden. So kann der Führungsabschnitt beispielsweise zylinderförmig ausgebildet sein und eine entsprechende zylinderförmige Führungsfläche bereitstellen.

In einer weiteren bevorzugten Ausführungsform der erfindungsgemäßen Kupplung ist der zweite Ölteilraum dem Außenlamellenträger zugeordnet. Hierunter ist zu verstehen, dass der Außenlamellenträger an das Öl innerhalb des zweiten Ölteilraumes angrenzt, wobei - wie bereits eingangs erläutert - der Außenlamellenträger beispielsweise aus einem Teil eines Kupplungsgehäuses und einem daran befestigten umlaufenden Tragteil gebildet sein kann.

In einer weiteren bevorzugten Ausführungsform der erfindungsgemäßen Kupplung ist die Trennwand axial unverschiebbar mit der ersten oder zweiten Welle verbunden. Eventuelle Druckunterschiede auf beiden Seiten der Trennwand führen hier nicht zu einer Verschiebung der Trennwand, wie dies zum Beispiel bei dem Betätigungskolben der Fall wäre. Vielmehr werden die entstehenden Kräfte über die erste oder zweite Welle abgeleitet.

In einer besonders bevorzugten Ausführungsform der erfindungsgemäßen Kupplung ist die Trennwand als separates Teil ausgebildet und mittelbar oder unmittelbar an der ersten oder zweiten Welle befestigt. So würde beispielsweise eine einstückig mit der Welle oder dem Kupplungsgehäuse ausgebildete Trennwand einen hohen Fertigungsaufwand verursachen, der durch eine zunächst separat gefertigte Trennwand nicht entsteht. Darüber hinaus kann die Trennwand auf diese Weise leichter und genauer gefertigt sein, was unter anderem das Gewicht der Kupplung reduziert.

In einer vorteilhaften Ausführungsform der erfindungsgemäßen Kupplung ist der Betätigungskolben ringförmig ausgebildet. So kann der Betätigungskolben beispielsweise eine innere zylinderförmige Führungsfläche aufweisen, die auf dem Führungsabschnitt der Trennwand aufliegt.

In einer weiteren vorteilhaften Ausführungsform der erfindungsgemäßen Kupplung ist der Betätigungskolben drehfest mit der Trennwand verbunden. Auf diese Weise rotiert der Betätigungskolben mit der selben Drehgeschwindigkeit wie diejenige Welle, mit der die Trennwand drehfest verbunden ist.

Um das reibschlüssige Verbinden der Außenlamellen mit den Innenlamellen zu gewährleisten, kann der Betätigungskolben in einer weiteren vorteilhaften Ausführungsform der erfindungsgemäßen Kupplung gegen eine der Außenlamellen gedrückt werden.

In einer weiteren bevorzugten Ausführungsform der erfindungsgemäßen Kupplung ist die Trennwand drehfest mit der zweiten Welle verbunden.

Um zu gewährleisten, dass der Betätigungskolben weitgehend von Öl umgeben ist, das sich mit der selben Geschwindigkeit innerhalb der Kupplung bewegt, bilden der Betätigungskolben und die Außenlamelle in axialer Richtung betrachtet in einer weiteren besonders bevorzugten Ausführungsform der erfindungsgemäßen Kupplung eine Überlappungsfläche aus, die größer als eine eventuell verbleibende Restfläche des Betätigungskolbens ist, wenn dieser in axialer Richtung betrachtet wird. Auf diese Weise wird ein guter Fliehölausgleich erzielt.

In einer weiteren bevorzugten Ausführungsform der erfindungsgemäßen Kupplung ist die Überlappungsfläche derart ausgebildet, dass keinerlei Restfläche des Betätigungskolbens verbleibt. Dies bedeutet, dass der Betätigungskolben in axialer Richtung vollständig vor bzw. hinter der Außenlamelle angeordnet ist, wodurch ein besonders guter Fliehölausgleich erzielt wird, zumal Außenlamelle und Betätigungskolben mit der selben Drehzahl rotieren.

Gemäß einer weiteren bevorzugten Ausführungsform der erfindungsgemäßen Kupplung sind die Trennwand, der Betätigungskolben und der Innenlamellenträger derart zueinander angeordnet, dass allenfalls die Restfläche nicht aber die Überlappungsfläche des Betätigungskolbens an das Öl innerhalb des ersten Ölteilraums angrenzt. Auf diese Weise wird der Einfluss des Fliehöls auf den Betätigungskolben reduziert.

In einer weiteren vorteilhaften Ausführungsform der erfindungsgemäßen Kupplung wirkt die Rückholfeder mit der Restfläche des Betätigungskolbens zusammen.

In einer weiteren vorteilhaften Ausführungsform der erfindungsgemäßen Kupplung ist die Differenz zwischen dem Außenradius des Betätigungskolbens und dem Innenradius der Außenlamelle größer als die Differenz zwischen dem Innenradius der Außenlamelle und dem Innenradius des Betätigungskolbens. Auf diese Weise ist ein guter Fliehölausgleich gewährleistet.

Um eine sichere Führung des Betätigungskolbens zu gewährleisten, ist dieser in einer weiteren vorteilhaften Ausführungsform der erfindungsgemäßen Kupplung in radialer Richtung von innen an dem Außenlamellenträger abgestützt und geführt.

Um die Kupplung besonders leichtbauend fertigen zu können, ist in einer weiteren vorteilhaften Ausführungsform der erfindungsgemäßen Kupplung ein arehfest mit der zweiten Welle verbundenes Kupplungsgehäuse vorgesehen, wobei der Außenlamellenträger aus einem umlaufenden Tragteil, das an dem Kupplungsgehäuse befestigt ist, und einem sich radial nach innen erstreckenden Kupplungsgehäuseabschnitt gebildet ist.

In einer weiteren vorteilhaften Ausführungsform der erfindungsgemäßen Kupplung ist die Kupplung eine nasslaufende Anfahrkupplung.

Die erfindungsgemäße Kupplungsanordnung weist eine erfindungsgemäße Kupplung der zuvor beschriebenen Art auf.

In einer bevorzugten Ausführungsform der erfindungsgemäßen Kupplungsanordnung ist die erste Welle eine mit einem Motor verbundene Antriebswelle und die zweite Welle eine Getriebeeingangswelle.

In einer weiteren bevorzugten Ausführungsform der erfindungsgemäßen Kupplungsanordnung ist die Antriebswelle über einen trockenen Torsionsschwingungsdämpfer mit der Kurbelwelle des Motors verbunden. Der Torsionsschwingungsdämpfer ist somit nicht in dem mit Öl o. ä. gefülltem Kupplungsgehäuse angeordnet.

In einer besonders bevorzugten Ausführungsform der erfindungsgemäßen Kupplungsanordnung ist eine elektrische Maschine mit einem Rotor und einem Stator vorgesehen, wobei der Rotor drehfest mit dem Kupplungsgehäuse verbunden ist. Eine solche Kupplungsanordnung eignet sich somit für einen hybriden Antriebsstrang, zumal der sonst übliche Drehmomentwandler durch die Kupplung mit der elektrischen Maschine ersetzt werden kann.

Im Folgenden wird die Erfindung anhand einer beispielhaften Ausführungsform unter Bezugnahme auf die beigefügten Zeichnungen näher erläutert. Es zeigen:
- Fig. 1: eine Seitenansicht einer Ausführungsform der erfindungsgemäßen Kupplung in geschnittener Darstellung und
- Fig. 2: eine schematische Darstellung zur Veranschaulichung der Überlappungsfläche und der Restfläche des Betätigungskolbens von Fig. 1.

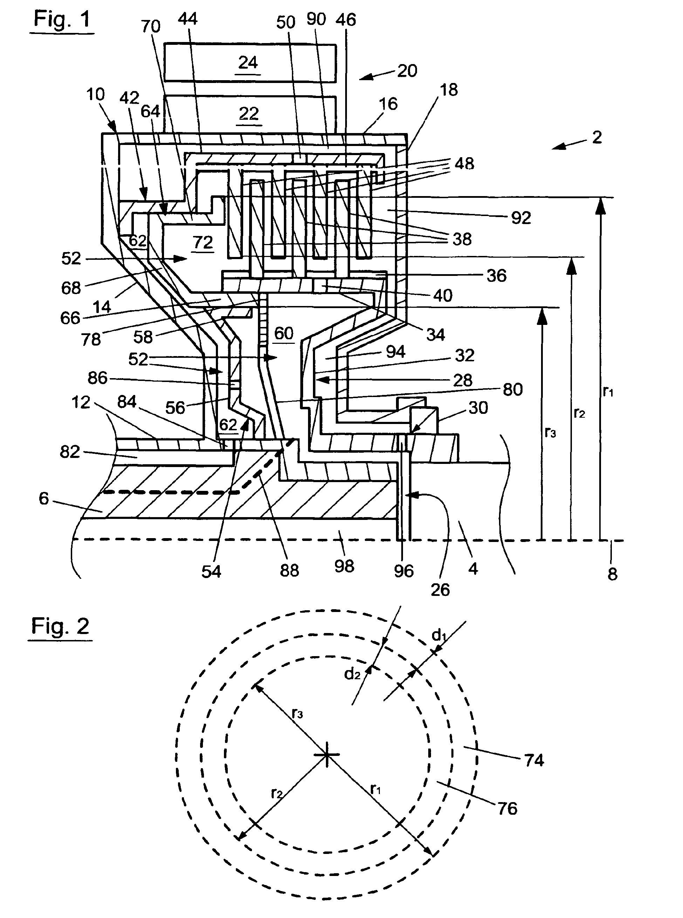

Fig. 1 zeigt eine Ausführungsform der Kupplung 2 in einer Kupplungsanordnung, wobei die Kupplung 2 als nasslaufende Anfahrkupplung ausgebildet ist. Die Kupplung 2 weist eine erste Welle 4 und eine zweite Welle 6 auf, die sich hintereinander liegend entlang einer Rotationsachse 8 erstrecken. Die erste Welle 4 ist hierbei als Antriebswelle ausgebildet, die über einen trockenen Torsionsschwingungsdämpfer mit der Kurbelwelle eines Motors verbunden ist (nicht dargestellt). Die zweite Welle 6 ist als Getriebeeingangswelle eines Automatikgetriebes ausgebildet. In Fig. 1 wurde aus Gründen der Übersichtlichkeit auf die Darstellung der Lager für die erste und/oder zweite Welle 4, 6 verzichtet.

Die Kupplung 2 weist ferner ein Kupplungsgehäuse 10 auf. Das Kupplungsgehäuse 10 umfasst einen drehfest mit der zweiten Welle 6 verbundenen ersten Kupplungsgehäuseabschnitt 12, der im Wesentlichen zylindrisch ausgebildet ist, einen sich an den ersten Kupplungsgehäuseabschnitt 12 anschließenden und radial nach außen erstreckenden zweiten Kupplungsgehäuseabschnitt 14, einen sich an den zweiten Kupplungsgehäuseabschnitt 14 anschließenden dritten Kupplungsgehäuseabschnitt 16, der wiederum zylindrisch ausgebildet ist und die radial äußere Begrenzung darstellt, und einen sich an den dritten Kupplungsgehäuseabschnitt 16 anschließenden deckelartigen vierten Kupplungsgehäuseabschnitt 18, der die Antriebsseite in axialer Richtung verschließt. Die Kupplungsanordnung umfasst ferner eine elektrische Maschine 20 mit einem Rotor 22 und einem Stator 24, wobei der Rotor 22 drehfest mit dem dritten Kupplungsgehäuseabschnitt 16 des Kupplungsgehäuses 10 verbunden ist.

In dem vierten Kupplungsgehäuseabschnitt 18 ist eine Öffnung 26 vorgesehen, durch die sich die erste Welle 4 in das Kupplungsgehäuse 10 erstreckt. An der ersten Welle 4 ist ein Innenlamellenträger 28 drehfest angeordnet. Der Innenlamellenträger 28, der mit Hilfe einer Dichtung 30 gegenüber dem vierten Kupplungsgehäuseabschnitt abgedichtet ist, umfasst einen sich radial innerhalb des Kupplungsgehäuses 10 nach außen erstreckenden Abschnitt 32, an den sich ein einstückig mit dem Abschnitt 32 ausgebildetes, im Wesentlichen zylindrisches Tragteil 34 anschließt. Das Tragteil 34 weist eine radial nach außen weisende Verzahnung 36 auf, mit deren Hilfe die Innenlamellen 38 drehfest jedoch axial verschiebbar an dem Tragteil 34 angeordnet sein können. Durch das Tragteil 34 erstrecken sich Aussparungen 40 in radialer Richtung, von denen lediglich eine in der Figur dargestellt ist.

Die Kupplung 2 weist ferner einen Außenlamellenträger 42 auf, der sich aus dem radial nach innen bzw. außen erstreckenden zweiten Kupplungsgehäuseabschnitt 14 und einem an dem zweiten Kupplungsgehäuseabschnitt 14 befestigten umlaufenden Tragteil 44 zusammensetzt. Das Tragteil 44 ist im Wesentlichen zylindrisch ausgebildet und weist an seiner radial nach innen weisenden Seite eine Verzahnung 46 auf, mit deren Hilfe die Außenlamellen 48 drehfest jedoch axial verschiebbar an dem Tragteil 44 angeordnet sein können. Durch das Tragteil 44 erstrecken sich Aussparungen 50 in radialer Richtung, von denen lediglich eine in der Figur dargestellt ist. In axialer Richtung wechseln sich Außenlamellen 48 und Innenlamellen 38 hintereinander liegend ab.

Der Innenlamellenträger 28 und der Außenlamellenträger 42 umschließen einen Ölraum 52, das heißt, der Ölraum 52 ist von dem Abschnitt 32 des Innenlamellenträgers 28, dem Tragteil 34 des Innenlamellenträgers, den Innen- und Außenlamellen 38, 48, dem Tragteil 44 des Außenlamellenträgers 42 und dem zweiten Kupplungsgehäuseabschnitt 14, der als Teil des Außenlamellenträgers 42 ausgebildet ist, umgeben.

In dem Ölraum 52 ist eine Trennwand 54 angeordnet. Die Trennwand 54 ist drehfest mit der zweiten Welle 6 verbunden und kann nicht in axialer Richtung entlang der Welle 6 verschoben werden. Die drehfeste Verbindung zwischen der Trennwand 54 und der zweiten Welle 6 erfolgt hier mittelbar über den an der zweiten Welle 6 drehfest befestigten ersten Kupplungsgehäuseabschnitt 12. Die Trennwand 54 ist dabei als separates Teil ausgebildet, das nachträglich an dem ersten Kupplungsgehäuseabschnitt 12 befestigt wurde.

Die Trennwand 52 umfasst einen sich radial nach außen erstreckenden Ringscheibenabschnitt 56, an dem sich ein im Wesentlichen zylindrischer Führungsabschnitt 58 anschließt. Die Trennwand 52 erstreckt sich dabei derart weit radial nach außen, dass der Ölraum 52 in einen dem Innenlamellenträger 28 zugeordneten ersten Ölteilraum 60 und einen dem Außenlamellenträger 42 zugeordneten zweiten Ölteilraum 62 unterteilt ist.

In dem Ölraum 52 ist ferner ein ringförmiger Betätigungskolben 64 zum hydraulisch gesteuerten reibschlüssigen Verbinden der Außenlamellen 48 mit den Innenlamellen 38 vorgesehen. Der Betätigungskolben 64 weist einen inneren Führungsabschnitt 66, einen mittleren Abschnitt 68 und einen äußeren Führungsabschnitt 70 auf. Der Betätigungskolben 64 ist dabei derart angeordnet, dass der innere Führungsabschnitt 66 in radialer Richtung von außen an dem Führungsabschnitt 58 der Trennwand 54 abgestützt ist. Dabei kann der Betätigungskolben 64 in axialer Richtung relativ zu dem Führungsabschnitt 58 verschoben werden, wie dies anhand des Doppelpfeiles angedeutet ist. Der Betätigungskolben 64 ist ferner drehfest mit der Trennwand 54 und somit mit der zweiten Welle 6 verbunden. Der Betätigungskolben 64 ist darüber hinaus mit dem äußeren Führungsabschnitt 70 von innen an dem umlaufenden Tragteil 44 des Außenlamellenträgers 42 abgestützt und geführt. Durch die Anordnung des Betätigungskolbens 64 in dem Ölraum 52 entsteht ferner ein dritter Ölteilraum 72, der von dem Betätigungskolben 64, den Lamellen 38, 48 und dem Tragteil 34 des Innenlamellenträgers 28 begrenzt ist.

Der Betätigungskolben 64 und die dem Betätigungskolben 64 zugewandte Außenlamelle 48, gegen die der Betätigungskolben 64 gedrückt werden kann, bilden in axialer Richtung betrachtet eine ringförmige Überlappungsfläche 74 aus, deren Flächeninhalt größer als die verbleibende Restfläche 76 des Betätigungskolbens ist, was in Fig. 2 veranschaulicht ist. Dies wird in der dargestellten Ausführungsform dadurch erreicht, dass die Differenz d₁ zwischen dem Außenradius r₁ des Betätigungskolbens 64 und dem Innenradius r₂ der Außenlamelle 48 größer als die Differenz d₂ zwischen dem Innenradius r₂ der Außenlamelle 48 und dem Innenradius r₃ des Betätigungskolbens 64 ist. Besonders vorteilhaft ist es, wenn die Überlappungsfläche 74 derart ausgebildet ist, dass keinerlei Restfläche 76 des Betätigungskolbens 64 verbleibt, wobei auf die Darstellung einer solchen Ausführungsform verzichtet wurde.

Wie aus Fig. 1 ersichtlich, sind die Trennwand 54, der Betätigungskolben 64 und der Innenlamellenträger 28 derart zueinander angeordnet, dass allenfalls ein Teil der Restfläche 76 nicht aber die Überlappungsfläche 74 des Betätigungskolbens 64 dem Öl innerhalb des ersten Ölteilraums 60 zugewandt ist bzw. an das Öl innerhalb des ersten Ölteilraums 60 angrenzt. In dem vorliegenden Beispiel wird dieser Teil der Restfläche 76 von der Kante 78 des inneren Führungsabschnittes 66 des Betätigungskolbens 64 gebildet. An dieser Kante 78 greift ferner eine als Tellerfeder ausgebildete Rückholfeder 80 an, die innerhalb des ersten Ölteilraumes 60 angeordnet ist.

Bei einem Anfahrvorgang, bei dem die erste Welle 4 mit einer sehr hohen Drehzahl des Motors rotiert, während die zweite Welle 6 noch stillsteht, wird das Öl innerhalb des ersten Ölteilraumes 60 besonders stark nach außen beschleunigt, wodurch in dem ersten Ölteilraum 60 ein hoher Fliehöldruck entsteht. Da der Außenlamellenträger 42, der Betätigungskolben 64 und die Trennwand 54 jedoch mit der zweiten Welle drehfest verbunden sind, werden diese anfangs noch nicht gedreht, so dass in dem zweiten Ölteilraum 62 kein entsprechend entgegengesetzter Fliehöldruck entsteht. Da der Betätigungskolben 64 jedoch außen an der Trennwand 54 abgestützt ist und dem ersten Ölteilraum 60 lediglich einen Teil der Restfläche 76 zuwendet, bleibt der Fliehöldruck innerhalb des ersten Ölteilraums 60 weitgehend ohne Einfluss auf die axiale Bewegung des Betätigungskolbens 64. Auch herrschen in dem zweiten Ölteilraum 62, der von dem Außenlamellenträger 42, dem Betätigungskolben 64 und der Trennwand 54 umgeben ist, und dem dritten Ölteilraum 72, der im Wesentlichen von dem Betätigungskolben 64 und der Außenlamelle 48 umgeben ist, annähernd die selben Druckverhältnisse, so dass ein weitgehender Fliehölausgleich bei geringem Aufwand erreicht ist.

Die hydraulische Steuerung des Betätigungskolbens 64 erfolgt dabei über eine Leitung 82 in der zweiten Welle 6, die über eine Öffnung 84 in dem ersten Kupplungsgehäuseabschnitt 12 mit dem zweiten Ölteilraum 62 verbunden ist. Wird der zweite Ölteilraum 62 auf dem genannten Wege mit Druck beaufschlagt, so bewirkt dies eine axiale Verschiebung des Betätigungskolbens 64 gegen die Außenlamelle 48, woraufhin die Außen- und Innenlamellen 48, 38 zusammengedrückt werden.

Zur Kühlung kann von dem zweiten Ölteilraum 62 über eine Aussparung 86 in der Trennwand 54 Öl in den ersten Ölteilraum 60 geleitet werden. Man spricht bei einer solchen Abzweigung von einem 2-Kanal-System. Alternativ kann auch ein 3-Kanal-System verwendet werden, bei dem über einen zusätzlichen Kanal 88 in der zweiten Welle 6, der in Fig. 1 lediglich gestrichelt angedeutet ist, Öl in den ersten Ölteilraum 60 geleitet wird. In beiden Fällen wird das Kühlöl nach außen durch die Aussparungen 40 in dem Innenlamellenträger 28, zwischen den Außen- und Innenlamellen 48, 38 hindurch und durch die Aussparungen 50 in dem Außenlamellenträger 42 gedrückt. Anschließend wird das Öl durch einen ersten Kanal 90 zwischen dem Tragteil 44 und dem dritten Kupplungsgehäuseabschnitt 16, einen zweiten Kanal 92 zwischen dem Lamellenpaket und dem vierten Kupplungsgehäuseabschnitt 18, einen dritten Kanal 94 zwischen dem Abschnitt 32 des Innenlamellenträgers 28 und dem vierten Kupplungsgehäuseabschnitt 18 und eine Aussparung 96 in dem Innenlamellenträger 28 in eine zentrale Bohrung 98 in der zweiten Welle 6 geleitet, um zurückgeführt zu werden.

**Bezugszeichenliste**

| | |
|---|---|
| 2 | Kupplung |
| 4 | erste Welle |
| 6 | zweite Welle |
| 8 | Rotationsachse |
| 10 | Kupplungsgehäuse |
| 12 | erster Kupplungsgehäuseabschnitt |
| 14 | zweiter Kupplungsgehäuseabschnitt |
| 16 | dritter Kupplungsgehäuseabschnitt |
| 18 | vierter Kupplungsgehäuseabschnitt |
| 20 | elektrische Maschine |
| 22 | Rotor |
| 24 | Stator |
| 26 | Öffnung |
| 28 | Innenlamellenträger |
| 30 | Dichtung |
| 32 | Abschnitt des Innenlamellenträgers |
| 34 | Tragteil des Innenlamellenträgers |
| 36 | Verzahnung |
| 38 | Innenlamellen |
| 40 | Aussparung |
| 42 | Außenlamellenträger |
| 44 | Tragteil des Außenlamellenträgers |
| 46 | Verzahnung |
| 48 | Außenlamellen |
| 50 | Aussparung |
| 52 | Ölraum |
| 54 | Trennwand |
| 56 | Ringscheibenabschnitt |
| 58 | Führungsabschnitt der Trennwand |
| 60 | erster Ölteilraum |
| 62 | zweiter Ölteilraum |
| 64 | Betätigungskolben |
| 66 | innerer Führungsabschnitt |
| 68 | mittlerer Abschnitt |
| 70 | äußerer Führungsabschnitt |
| 72 | dritter Ölteilraum |
| 74 | Überlappungsfläche |
| 76 | Restfläche |
| 78 | Kante des inneren Führungsabschnitts |
| 80 | Rückholfeder |
| 82 | Leitung |
| 84 | Aussparung |
| 86 | Aussparung |
| 88 | zusätzlicher Kanal |
| 90 | erster Kanal |
| 92 | zweiter Kanal |
| 94 | dritter Kanal |
| 96 | Aussparung |
| 98 | zentrale Bohrung |

## Patentansprüche

1. Kupplung mit einem Innenlamellenträger (28), der drehfest mit einer ersten Welle (4) verbunden ist, einem Außenlamellenträger (42), der drehfest mit einer zweiten Welle (6) verbunden ist, und einem Betätigungskolben (64) zum reibschlüssigen Verbinden der Außenlamellen (48) an dem Außenlamellenträger (42) mit den Innenlamellen (38) an dem Innenlamellenträger (28), wobei zwischen dem Innenlamellenträger (28) und dem Außenlamellenträger (42) ein Ölraum (52) ausgebildet ist, der von einer drehfest mit der ersten oder zweiten Welle (4; 6) verbundenen Trennwand (54) in einen dem Innenlamellenträger (28) zugeordneten ersten Ölteilraum (60) und einen zweiten Ölteilraum (62) unterteilt ist, und der Betätigungskolben (64) in radialer Richtung von außen an einem Führungsabschnitt (58) der Trennwand (54) abgestützt ist, **dadurch gekennzeichnet, dass** eine mit dem Betätigungskolben (64) zusammenwirkende Rückholfeder (80) in dem ersten Ölteilraum (60) angeordnet ist.

2. Kupplung nach Anspruch 1, **dadurch gekennzeichnet, dass** der Betätigungskolben (64) in axialer Richtung entlang des Führungsabschnittes (58) der Trennwand (54) verschiebbar ist.

3. Kupplung nach einem der Ansprüche 1 oder 2, **dadurch gekennzeichnet, dass** der zweite Ölteilraum (62) dem Außenlamellenträger (42) zugeordnet ist.

4. Kupplung nach einem der vorangehenden Ansprüche, **dadurch gekennzeichnet, dass** die Trennwand (54) axial unverschiebbar mit der ersten oder zweiten Welle (4; 6) verbunden ist.

5. Kupplung nach einem der vorangehenden Ansprüche, **dadurch gekennzeichnet, dass** die Trennwand (54) als separates Teil ausgebildet und mittelbar oder unmittelbar an der ersten oder zweiten Welle (4; 6) befestigt ist.

6. Kupplung nach einem der vorangehenden Ansprüche, **dadurch gekennzeichnet, dass** der Betätigungskolben (64) ringförmig ausgebildet, drehfest mit der Trennwand (54) verbunden oder/und gegen eine der Außenlamellen (48) drückbar ist.

7. Kupplung nach Anspruch 6, **dadurch gekennzeichnet, dass** die Trennwand (54) drehfest mit der zweiten Welle (6) verbunden.

8. Kupplung nach einem der Ansprüche 6 oder 7, **dadurch gekennzeichnet, dass** der Betätigungskolben (64) und die Außenlamelle (48) in axialer Richtung betrachtet eine Überlappungsfläche (74) ausbilden, die größer als eine eventuell verbleibende Restfläche (76) des Betätigungskolbens (64) ist, wobei die Überlappungsfläche (74) vorzugsweise derart ausgebildet ist, dass keinerlei Restfläche (76) des Betätigungskolbens (64) verbleibt.

9. Kupplung nach Anspruch 8, **dadurch gekennzeichnet, dass** die Trennwand (54), der Betätigungskolben (64) und der Innenlamellenträger (28) derart zueinander angeordnet sind, dass allenfalls die Restfläche (76) nicht aber die Überlappungsfläche (74) des Betätigungskolbens (64) an das Öl innerhalb des ersten Ölteilraums (60) angrenzt, wobei die Rückholfeder (80) vorzugsweise mit der Restfläche (76) des Betätigungskolbens (64) zusammenwirkt.

10. Kupplung nach einem der Ansprüche 8 oder 9, **dadurch gekennzeichnet, dass** die Differenz (d₁) zwischen dem Außenradius (r₁) des Betätigungskolbens (64) und dem Innenradius (r₂) der Außenlamelle (48) größer als die Differenz (d₂) zwischen dem Innenradius (r₂) der Außenlamelle (48) und dem Innenradius (r₃) des Betätigungskolbens (64) ist.

11. Kupplung nach einem der vorangehenden Ansprüche, **dadurch gekennzeichnet, dass** der Betätigungskolben (64) in radialer Richtung von innen an dem Außenlamellenträger (42) abgestützt und geführt ist.

12. Kupplung nach einem der vorangehenden Ansprüche, **dadurch gekennzeichnet, dass** ein drehfest mit der zweiten Welle (6) verbundenes Kupplungsgehäuse (10) vorgesehen ist, wobei der Außenlamellenträger (42) aus einem umlaufenden Tragteil (44), das an dem Kupplungsgehäuse (10) befestigt ist, und einem sich radial nach innen erstreckenden Kupplungsgehäuseabschnitt (14) gebildet ist.

13. Kupplung nach einem der vorangehenden Ansprüche, **dadurch gekennzeichnet, dass** die Kupplung (2) eine nasslaufende Anfahrkupplung ist.

14. Kupplungsanordnung mit einer Kupplung (2) nach einem der vorangehenden Ansprüche, wobei vorzugsweise die erste Welle (4) eine mit einem Motor verbundene Antriebswelle und die zweite Welle (6) eine Getriebeeingangswelle und die Antriebswelle besonders bevorzugt über einen trockenen Torsionsschwingungsdämpfer mit der Kurbelwelle des Motors verbunden ist.

15. Kupplungsanordnung nach Anspruch 14, **dadurch gekennzeichnet, dass** eine elektrische Maschine (20) mit einem Rotor (22) und einem Stator (24) vorgesehen ist, wobei der Rotor (22) drehfest mit dem Kupplungsgehäuse (10) verbunden ist.

## Claims

1. Clutch having an inner disc carrier (28) which is connected fixedly to a first shaft (4) so as to rotate with it, an outer disc carrier (42) which is connected fixedly to a second shaft (6) so as to rotate with it, and an actuating piston (64) for the frictional connection of the outer discs (48) on the outer disc carrier (42) to the inner discs (38) on the inner disc carrier (28), an oil space (52) being formed between the inner disc carrier (28) and the outer disc carrier (42), which oil space (52) is divided by a dividing wall (54) which is connected fixedly to the first or second shaft (4; 6) so as to rotate with it into a first oil part space (60) which is assigned to the inner disc carrier (28) and into a second oil part space (62), and the actuating piston (64) being supported in the radial direction from the outside on a guide section (58) of the dividing wall (54), **characterized in that** a return spring (80) which interacts with the actuating piston (64) is arranged in the first oil part space (60).

2. Clutch according to Claim 1, **characterized in that** the actuating piston (64) can be displaced in the axial direction along the guide section (58) of the dividing wall (54).

3. Clutch according to either of Claims 1 and 2, **characterized in that** the second oil part space (62) is assigned to the outer disc carrier (42).

4. Clutch according to one of the preceding claims, **characterized in that** the dividing wall (54) is connected in an axially non-displaceable manner to the first or second shaft (4; 6).

5. Clutch according to one of the preceding claims, **characterized in that** the dividing wall (54) is configured as a separate part and is fastened indirectly or directly to the first or second shaft (4; 6).

6. Clutch according to one of the preceding claims, **characterized in that** the actuating piston (64) is of annular configuration, is connected fixedly to the dividing wall (54) so as to rotate with it, and/or can be pressed against one of the outer discs (48).

7. Clutch according to Claim 6, **characterized in that** the dividing wall (54) is connected fixedly to the second shaft (6) so as to rotate with it.

8. Clutch according to either of Claims 6 and 7, **characterized in that**, as viewed in the axial direction, the actuating piston (64) and the outer disc (48) form an overlapping face (74) which is greater than a possibly remaining residual face (76) of the actuating piston (64), the overlapping face (74) preferably being configured in such a way that no residual face (76) at all of the actuating piston (64) remains.

9. Clutch according to Claim 8, **characterized in that** the dividing wall (54), the actuating piston (64) and the inner disc carrier (28) are arranged with respect to one another in such a way that at most the residual face (76) but not the overlapping face (74) of the actuating piston (64) adjoins the oil within the first oil part space (60), the return spring (80) preferably interacting with the residual face (76) of the actuating piston (64).

10. Clutch according to either of Claims 8 and 9, **characterized in that** the difference (d₁) between the outer radius (r₁) of the actuating piston (64) and the inner radius (r₂) of the outer disc (48) is greater than the difference (d₂) between the inner radius (r₂) of the outer disc (48) and the inner radius (r₃) of the actuating piston (64).

11. Clutch according to one of the preceding claims, **characterized in that** the actuating piston (64) is supported and guided in the radial direction from the inside on the outer disc carrier (42).

12. Clutch according to one of the preceding claims, **characterized in that** a clutch housing (10) is provided which is connected fixedly to the second shaft (6) so as to rotate with it, the outer disc carrier (42) being formed from a circumferential carrier part (44) which is fastened to the clutch housing (10) and a radially inwardly extending clutch-housing section (14).

13. Clutch according to one of the preceding claims, **characterized in that** the clutch (2) is a wet-running start-up clutch.

14. Clutch arrangement having a clutch (2) according to one of the preceding claims, the first shaft (4) preferably being a drive shaft which is connected to an engine and the second shaft (6) being a transmission input shaft and the drive shaft particularly preferably being connected to the crankshaft of the engine via a dry torsional vibration damper.

15. Clutch arrangement according to Claim 14, **characterized in that** an electric machine (20) with a rotor (22) and a stator (24) is provided, the rotor (22) being connected fixedly to the clutch housing (10) so as to rotate with it.

## Revendications

1. Embrayage comprenant un support de disques intérieurs (28) qui est relié de manière solidaire en rotation à un premier arbre (4), un support de disques extérieurs (42) qui est relié de manière solidaire en rotation à un deuxième arbre (6) et un piston d'actionnement (64) pour la liaison par friction des disques extérieurs (48) sur le support de disques extérieurs (42) aux disques intérieurs (38) sur le support de disques intérieurs (28), une chambre d'huile (52) étant réalisée entre le support de disques intérieurs (28) et le support de disques extérieurs (42), laquelle chambre d'huile étant divisée, par une paroi de séparation (54) reliée de manière solidaire en rotation au premier ou au deuxième arbre (4 ; 6), en une première chambre d'huile partielle (60) associée au support de disques intérieurs (28) et une deuxième chambre d'huile partielle (62), et le piston d'actionnement (64) s'appuyant dans la direction radiale, depuis l'extérieur, contre une portion de guidage (58) de la paroi de séparation (54), **caractérisé en ce qu**'un ressort de rappel (80) coopérant avec le piston d'actionnement (64) est disposé dans la première chambre d'huile partielle (60).

2. Embrayage selon la revendication 1, **caractérisé en ce que** le piston d'actionnement (64) est déplaçable dans la direction axiale le long de la portion de guidage (58) de la paroi de séparation (54).

3. Embrayage selon la revendication 1 ou 2, **caractérisé en ce que** la deuxième chambre d'huile partielle (62) est associée au support de disques extérieurs (42).

4. Embrayage selon l'une quelconque des revendications précédentes, **caractérisé en ce que** la paroi de séparation (54) est reliée de manière non déplaçable axialement au premier ou au deuxième arbre (4 ; 6).

5. Embrayage selon l'une quelconque des revendications précédentes, **caractérisé en ce que** la paroi de séparation (54) est réalisée sous forme de partie séparée et est fixée directement ou indirectement au premier ou au deuxième arbre (4 ; 6).

6. Embrayage selon l'une quelconque des revendications précédentes, **caractérisé en ce que** le piston d'actionnement (64) est annulaire, relié de manière solidaire en rotation à la paroi de séparation (54) et/ou peut être pressé contre l'un des disques extérieurs (48).

7. Embrayage selon la revendication 6, **caractérisé en ce que** la paroi de séparation (54) est reliée de manière solidaire en rotation au deuxième arbre (6).

8. Embrayage selon la revendication 6 ou 7, **caractérisé en ce que** le piston d'actionnement (64) et les disques extérieurs (48) forment, considéré dans la direction axiale, une surface de chevauchement (74) qui est plus grande qu'une surface restante (76), qui reste éventuellement, du piston d'actionnement (64), la surface de chevauchement (74) étant de préférence réalisée de telle sorte qu'aucune surface restante (76) du piston d'actionnement (64) ne reste.

9. Embrayage selon la revendication 8, **caractérisé en ce que** la paroi de séparation (54), le piston d'actionnement (64) et le support de disques intérieurs (28) sont disposés les uns par rapport aux autres de telle sorte qu'éventuellement la surface restante (76), mais pas la surface de chevauchement (74), du piston d'actionnement (64) est adjacente à l'huile à l'intérieur de la première chambre d'huile partielle (60), le ressort de rappel (80) coopérant de préférence avec la surface restante (76) du piston d'actionnement (64).

10. Embrayage selon la revendication 8 ou 9, **caractérisé en ce que** la différence (d₁) entre le rayon extérieur (r₁) du piston d'actionnement (64) et le rayon intérieur (r₂) des disques extérieurs (48) est supérieure à la différence (d₂) entre le rayon intérieur (r₂) des disques extérieurs (48) et le rayon intérieur (r₃) du piston d'actionnement (64).

11. Embrayage selon l'une quelconque des revendications précédentes, **caractérisé en ce que** le piston d'actionnement (64) s'appuie et est guidé depuis l'intérieur dans la direction radiale contre le support de disques extérieurs (42).

12. Embrayage selon l'une quelconque des revendications précédentes, **caractérisé en ce qu**'un carter d'embrayage (10) relié de manière solidaire en rotation au deuxième arbre (6) est prévu, le support de disques extérieurs (42) étant formé d'une partie de support périphérique (44) qui est fixée au carter d'embrayage (10) et d'une portion de carter d'embrayage (14) s'étendant radialement vers l'intérieur.

13. Embrayage selon l'une quelconque des revendications précédentes, **caractérisé en ce que** l'embrayage (2) est un embrayage de démarrage humide.

14. Système d'embrayage comprenant un embrayage (2) selon l'une quelconque des revendications précédentes, dans lequel, de préférence, le premier arbre (4) est un arbre d'entraînement relié au moteur et le deuxième arbre (6) est un arbre d'entrée de transmission, et l'arbre d'entraînement est, de manière particulièrement préférée, relié au vilebrequin du moteur par le biais d'un amortisseur de vibrations de torsion sec.

15. Système d'embrayage selon la revendication 14, **caractérisé en ce qu**'il est prévu une machine électrique (20) comprenant un rotor (22) et un stator (24), le rotor (22) étant relié de manière solidaire en rotation au carter d'embrayage (10).
